(19) Europäisches Patentamt / European Patent Office / Office européen des brevets

(11) **EP 2 738 241 A1**

(12) **EUROPEAN PATENT APPLICATION**
published in accordance with Art. 153(4) EPC

(43) Date of publication:
**04.06.2014 Bulletin 2014/23**

(51) Int Cl.:
*C10M 115/08* (2006.01)  *C10M 115/04* (2006.01)
*C10M 169/02* (2006.01)  *F16C 33/66* (2006.01)
*C10M 105/18* (2006.01)  *C10N 20/00* (2006.01)
*C10N 30/00* (2006.01)  *C10N 30/06* (2006.01)
*C10N 30/12* (2006.01)  *C10N 40/02* (2006.01)
*C10N 50/10* (2006.01)

(21) Application number: 12818403.3

(22) Date of filing: 26.07.2012

(86) International application number:
**PCT/JP2012/069040**

(87) International publication number:
**WO 2013/015386 (31.01.2013 Gazette 2013/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 26.07.2011 JP 2011163433
27.07.2011 JP 2011164752
18.07.2012 JP 2012159871

(71) Applicant: **NSK Ltd.**
**Tokyo 141-8560 (JP)**

(72) Inventors:
• **SONODA Kentaro**
**Kanagawa (JP)**
• **YOKOUCHI Atsushi**
**Kanagawa (JP)**
• **MATSUMOTO Tomoaki**
**Kanagawa (JP)**
• **NAKAGAWA Kazunori**
**Kanagawa (JP)**

(74) Representative: **Grünecker, Kinkeldey, Stockmair & Schwanhäusser**
**Leopoldstrasse 4**
**80802 München (DE)**

(54) **ROLLING DEVICE**

(57) The rolling device of the present invention is a rolling device that is equipped with an inner ring, an outer ring, and a plurality of rolling elements disposed between the inner ring and the outer ring so as to freely roll, and that is packed with a lubricant composition containing a gelling agent in which a difference between a worked consistency and an unworked consistency is 40-130, and this rolling device has low-torque characteristics, is excellent in terms of recovery property and heat resistance, is free from lubricant leakage, and has a long life.

*FIG. 1*

**Description**

Technical Field

The present invention relates to a rolling device into which a lubricant composition containing a gelling agent has been packed.

Background Art

Lubricant compositions have hitherto been packed into rolling bearings for use in various industrial machines, vehicles, electrical machines and apparatus, various motors, automotive parts, etc. in order to impart lubricity. In recent years, reductions in torque have come to be required for the purposes of reductions in size and weight, increases in speed, energy saving, etc. in apparatus and machines. In particular, rolling bearings for vehicles are required to further satisfy low-temperature starting characteristics.

It has been proposed to pack a lubricant composition obtained by thickening a base oil with a gelling agent, in order to attain a reduction in torque (for example, patent documents 1 to 6). For example, for obtaining a consistency of No. 3 in terms of worked consistency, general thickeners need to be used in an amount of about 10-30% by mass. However, a use amount of 4-5% by mass suffices for such consistency when an amino acid-based gelling agent or sorbitol-based gelling agent which has an excellent thickening effect is used. The larger the amount of the thickener in lubricant compositions, the higher the agitation resistance and the higher the torque. Consequently, by using a gelling agent to reduce the use amount, a reduction in torque is attained.

The present applicant showed in patent document 3 that by using an amino acid-based gelling agent and a benzylidene sorbitol-based gelling agent in combination, a further reduction in use amount can be attained and that use of the combination in an amount of 3% by mass suffices for a consistency of No. 3 in terms of worked consistency.

Background Art Document

Patent Document

Patent Document 1: JP-A-58-219297
Patent Document 2: International Publication WO 2006/051671
Patent Document 3: JP-A-2011-26432
Patent Document 4: JP-A-2005-139398
Patent Document 5: JP-A-2010-209129
Patent Document 6: JP-A-2010-196727

Summary of Invention

Problem that Invention is to Solve

In general, various additives are added to lubricant compositions. However, some additives pose a problem that the re-formation of a network (network structure) due to the gelling agent requires a prolonged time and the lubricant composition does not quickly recover the viscosity and is apt to leak out, resulting in cases where stable lubrication cannot be maintained over a long period.

Furthermore, lubricant compositions in which conventional gelling agents are used show satisfactory recovery properties so long as the compositions are used in environments of about 100°C. However, at elevated temperatures of, in particular, 150°C and higher, agglomerates of the gelling agents are apt to be formed to soften the lubricant compositions. Although such softened lubricant compositions become oily and flowable upon application of shear thereto, the network is difficult to re-form because the gelling agents have agglomerated. These lubricant compositions are reduced in the property of quickly recovering the gel state upon removal of the shear force (recovery properties).

Moreover, in the case where the conventional lubricant compositions repeatedly undergo an abrupt change in shear, the recovery may require a prolonged time, resulting in lubricant leakage.

Accordingly, an object of the invention is to eliminate those problems of lubricant compositions containing a gelling agent and to provide a rolling device which has low-torque characteristics, is excellent in terms of recovery property and heat resistance, is inhibited from suffering lubricant leakage, and has a long life.

Means for Solving Problem

In order to accomplish the object, the invention provides the following rolling devices.

(1) A rolling device, characterized by being equipped with an inner ring, an outer ring, and a plurality of rolling elements disposed between the inner ring and the outer ring so as to freely roll, and by being packed with a lubricant composition containing a gelling agent in which a difference between a worked consistency and an unworked consistency is 40-130.
(2) The rolling device according to (1) above, characterized in that the lubricant composition has an apparent viscosity as measured at shear rate 1,000 $s^{-1}$ of 5 Pa·s or less and an apparent viscosity as measured at shear rate 1 $s^{-1}$ of 500 Pa·s or higher.
(3) The rolling device according to (2) above, characterized in that the lubricant composition contains a thickener, and the gelling agent is at least one of an amino acid-based gelling agent and a benzylidene sorbitol-based gelling agent, in which the gelling agent has been mixed with the thickener in a ratio that (gelling agent):(thickener)=(50-80):(50-20) in terms of mass ratio, and
that a sum of the gelling agent and the thickener is 1-10% by mass of the whole lubricant composition.
(4) The rolling device according to (3) above, characterized in that the lubricant composition contains at least one agent selected from rust preventives and antiwear agents which each have a relative permittivity of 1,000 or higher at 1,000 Hz.
(5) The rolling device according to (4) above, characterized in that the lubricant composition contains a mixture of at least one agent selected from rust preventives and antiwear agents which each have a relative permittivity of 1,000 or higher at 1,000 Hz and at least one agent selected from rust preventives and antiwear agents which each have a relative permittivity less than 1,000 at 1,000 Hz.
(6) The rolling device according to (5) above, characterized in that a base oil of the lubricant composition includes an ether oil in a proportion of 10-50% by mass based on the whole base oil and that the gelling agent is a mixture in which (amino acid-based gelling agent):(benzylidene sorbitol-based gelling agent)=(50-85):(50-15) in terms of mass ratio.
(7) The rolling device according to any one of (2) to (6), characterized in that the lubricant composition contains inorganic particles which have a BET specific surface area of 300 $m^2$/g or more.

Effects of Invention

The lubricant composition to be used in the invention undergoes a large change in consistency to show improved flowability. Furthermore, since the composition contains a gelling agent, the composition brings about a lower torque and has excellent recovery properties and, hence, less susceptibility to leakage. Consequently, the rolling bearing into which such lubricant composition has been packed has low-torque characteristics, is less apt to suffer lubricant leakage, and has a long life.

Brief Description of Drawings

[Fig. 1] Fig. 1 is a cross-sectional view which illustrates one example (rolling bearing) of the rolling device of the invention.
[Fig. 2] Fig. 2 is a graph which shows a relationship between relative torque and the blending proportion of the amino acid-based gelling agent in mixtures of an amino acid-based gelling agent and a benzylidene sorbitol-based gelling agent.
[Fig. 3] Fig. 3 is a graph which shows a relationship between relative torque and the proportion of the gelling agent in the sum of a thickener and a gelling agent.
[Fig. 4] Fig. 4 is a graph which shows a relationship between the relative degree of leakage and the proportion of the gelling agent in the sum of a thickener and a gelling agent.
[Fig. 5] Fig. 5 is a graph which shows a relationship between the relative permittivity of additives and the percentage recovery of viscosity.
[Fig. 6] Fig. 6 is a graph which shows a relationship between the BET specific surface area of inorganic particles and the percentage recovery of viscosity.
[Fig. 7] Fig. 7 is a graph which shows a relationship between the BET specific surface area of inorganic particles and relative seizure life.

Mode for Carrying Out Invention

The invention will be explained below in detail.

[Difference between worked consistency and unworked consistency is 40-130]

The lubricant composition to be used in the invention contains a gelling agent, and preferably is a lubricant composition obtained by thickening a base oil using the gelling agent in combination with a thickener. The difference between the worked consistency and unworked consistency of the composition is 40-130, preferably 80-110. So long as the difference between the worked consistency and the unworked consistency is within that range, the lubricant composition undergoes a large change in consistency to have improved flowability and attain a low torque. In case where the difference between the worked consistency and the unworked consistency is less than 40, a low torque is not obtained. In case where the difference therebetween is larger than 130, this lubricant composition has poor recovery properties and is apt to leak out. Incidentally, values of the worked consistency and unworked consistency are determined in accordance with JIS K2220.

[Apparent viscosity at shear rate 1,000 $s^{-1}$ is 5 Pa·s or less and apparent viscosity at shear rate 1 $s^{-1}$ is 500 Pa·s or higher]

It is preferred that the lubricant composition should have an apparent viscosity as measured at shear rate 1,000 $s^{-1}$ of 5 Pa·s or less and an apparent viscosity as measured at shear rate 1 $s^{-1}$ of 500 Pa·s or higher. In the case where the lubricant composition has an apparent viscosity of 5 Pa·s or less under the high-shear-rate conditions (1,000 $s^{-1}$), this lubricant composition, when receiving shear, has a low apparent viscosity and satisfactory flowability, making it possible to obtain a low torque. On the other hand, in the case where the lubricant composition has an apparent viscosity of 500 Pa·s or higher at the low shear rate (1 $s^{-1}$), that portion of the lubricant composition which receives relatively weak shear has increased viscosity to render the lubricant composition less apt to leak out. It is preferred that the apparent viscosity thereof as measured at shear rate 1,000 $s^{-1}$ should be 3 Pa·s or less and the apparent viscosity thereof as measured at shear rate 1 $s^{-1}$ should be 700 Pa·s or higher.

[Makeup of the Lubricant Composition]

(Gelling Agent)

The gelling agent is not limited so long as the gelling agent is capable of thickening the base oil to satisfy the difference in consistency and the apparent viscosity both shown above. However, it is preferred that the gelling agent should be at least one of an amino acid-based gelling agent and/or a benzylidene sorbitol-based gelling agent, and it is more preferred to use an amino acid-based gelling agent and a benzylidene sorbitol-based gelling agent in combination. In amino acid-based gelling agents and benzylidene sorbitol-based gelling agents, the factor which governs network formation is hydrogen bonding force. However, since hydrogen bonds are weak bonds, the bonds are readily cleaved upon application of shear thereto and the gelling agent is dispersed in the base oil, resulting in a considerable decrease in viscosity. Upon elimination of the shear, hydrogen bonds are formed between sites and a network is quickly re-formed to recover the viscosity. Thus, amino acid-based gelling agents and benzylidene sorbitol-based gelling agents are gelling agents which are excellent in terms of low-torque characteristics and recovery property.
The amino acid-based gelling agent is not limited so long as the gelling agent can be dispersed in the base oil to form a gel. However, dibutyl N-2-ethylhexanoyl-L-glutamamide and $\alpha,\gamma$-n-dibutyl N-lauroyl-L-glutamamide are suitable because these amides show a high synergistic effect when used in combination with benzylidene sorbitol-based gelling agents. Those two amides may be used in combination.
Meanwhile, the benzylidene sorbitol-based gelling agent is not limited so long as the gelling agent can be dispersed in the base oil to form a gel. However, benzylidene sorbitol, ditolylidene sorbitol, and asymmetric dialkylbenzylidene sorbitols are suitable because these sorbitol compounds show a high synergistic effect when used in combination with amino acid-based gelling agents. Those sorbitol compounds may be used in combination.
In the case where an amino acid-based gelling agent and a benzylidene sorbitol-based gelling agent are used in combination, the (amino acid-based gelling agent):(benzylidene sorbitol-based gelling agent) mass ratio is regulated to preferably (20-85):(80-15), more preferably (40-60):(60-40), and it is especially preferred to use the two gelling agents in the same amount (50:50). By using an amino acid-based gelling agent and a benzylidene sorbitol-based gelling agent in combination, a synergistic effect is obtained and a lower torque and better recovery properties are obtained.
In the case where the base oil, which will be described later, includes an ether oil in a proportion of 10-50% by mass based on the whole base oil, the (amino acid-based gelling agent):(benzylidene sorbitol-based gelling agent) ratio is regulated to preferably (50-85):(50-15), more preferably (60-75):(40-25).

(Thickener)

As thickeners usable in combination with the gelling agent, use can be made of organic and inorganic thickeners. Preferred are metal soaps such as lithium soaps (lithium 12-hydroxystearate, lithium stearate, etc.), calcium soaps, magnesium soaps, and sodium soaps or complex soaps thereof, urea compounds (aromatic, alicyclic, and aliphatic), clay minerals such as bentonite, silica, carbon black, PTFE, and the like; these thickeners can be used according to the base oil. Suitable of these are lithium soaps and urea compounds. In the case where the lubricant composition is to be used in a high-temperature environment where the temperature exceeds 140°C, it is preferred to use a urea compound.

With respect to the blending proportion in which the thickener and the gelling agent are incorporated, the (gelling agent):(thickener) mass ratio may be (50-80):(50-20). In case where the blending proportion of the thickener is less than 20% by mass, the lubricant composition shows insufficient recovery properties when repeatedly undergoing shear, resulting in an insufficient leakage-preventive effect. In case where the blending proportion of the thickener exceeds 50% by mass, viscosity changes due to shear are reduced and, hence, the effects of reducing torque and improving acoustic life are not sufficiently obtained.

The sum of the thickener and the gelling agent (total thickening agent amount) may be 1-10% by mass, preferably 2-10% by mass, based on the whole lubricant composition. In case where the total thickening agent amount is less than 1% by mass, the effect of thickening the base oil is insufficient and this lubricant composition is so soft even in the initial stage that the composition is prone to leak out from the application site of, for example, a rolling bearing. In case where the total thickening agent amount exceeds 10% by mass, this lubricant composition not only has too high an initial consistency and poor handleability in lubricant filling, but also does not show a large decrease in viscosity upon application of shear thereto, resulting in an insufficient effect in reducing torque and improving acoustic life.

(Base Oil)

The base oil is not limited so long as the base oil is a lubricating oil which is caused to gel by the gelling agent and by the thickener, and a lubricating oil of the mineral-oil-based, synthetic-oil-based, or natural-oil-based type can be selected according to purposes. Specifically, preferred mineral-oil-based lubricating oils are ones obtained by a suitable combination of vacuum distillation, lubricant deasphalting, solvent extraction, hydrocracking, solvent dewaxing, sulfuric acid treatment, clay treatment, hydrofining, etc. Examples of the synthetic-oil-based lubricating oil include hydrocarbon oils, aromatic oils, ester oils, and ether oils. Examples of the natural-oil-based lubricating oil include fats or oils, such as beef tallow, lard, soybean oil, rapeseed oil, rice bran oil, coconut oil, palm oil, and palm kernel oil, or products of hydrogenation of these fats or oils. These base oils can be used either alone or as a mixture of two or more thereof.

From the standpoints of heat resistance and recovery properties, ether oils and ester oils are preferred. Especially preferred is a base oil which includes an ether oil in an amount of 10-50% by mass, preferably 20-40% by mass, based on the whole base oil. Examples of the ether oil include polyglycols such as polyethylene glycol, polypropylene glycol, polyethylene glycol monoethers, and polypropylene glycol monoethers and phenyl ether oils such as monoalkyl triphenyl ethers, alkyl diphenyl ethers, dialkyl diphenyl ethers, pentaphenyl ether, tetraphenyl ether, monoalkyl tetraphenyl ethers, and dialkyl tetraphenyl ethers.

The dynamic viscosity of the base oil is preferably 10-400 $mm^2$/s (40°C), more preferably 20-250 $mm^2$/s (40°C), especially preferably 20-200 $mm^2$/s (40°C), when lubricity and low-torque characteristics are taken into account.

(Additives)

Various additives may be incorporated according to need into the lubricant composition according to the invention in order to further improve various performances thereof. Preferred of these are rust preventives and antiwear agents which each have a relative permittivity of 1,000 or higher at 1,000 Hz. Specifically, examples of the antiwear agents include diphenyl hydrogen phosphite and mono-n-octyl phosphate, and examples of the rust preventives include diethylphosphonoacetic acid and sodium dialkylsulfosuccinates. Such rust preventives and antiwear agents may be used alone, or one or more of such rust preventives and one or more of such antiwear agents may be used in combination.

Many rust preventives and antiwear agents each have a chemical structure which includes many nonpolar portions besides a polar portion. In the case where a gelling agent is present, such a rust preventive or antiwear agent is in the state of having been adsorbed onto the gelling agent so that the polar portion faces the gelling agent and the nonpolar portions face the base oil side. Because of this, the gelling agent comes into the state in which the surface thereof is surrounded by the nonpolar portions of the rust preventive or antiwear agent, and is less apt to form hydrogen bond force. As a result, the gelling agent which has been dispersed by shear necessitates much time for re-forming a network, resulting in a decrease in viscosity recovery property. In contrast, in the case of the rust preventive or antiwear agent which has a relative permittivity of 1,000 or higher at 1,000 Hz, this rust preventive or antiwear agent, even in the state of having been adsorbed onto the gelling agent, has many polar portions in the part thereof which has not been adsorbed, and these polar portions form hydrogen bonds to thereby re-form a network, resulting in quick recovery of the viscosity.

It is possible to use the rust preventive and the antiwear agent each having a relative permittivity of 1,000 or higher at 1,000 Hz (high-relative-permittivity substances) in combination with a rust preventive and an antiwear agent each having a relative permittivity less than 1,000 at 1,000 Hz (high-relative-permittivity substances). Examples of the low-relative-permittivity substances include sorbitan monooleate, sorbitan trioleate, oleoylsarcosine, trioleyl phosphite, and polyoxyethylene lauryl ether.

These are cases where the high-relative-permittivity substances show poor dispersibility in the base oil, rendering the rust-preventive effect and the wear-preventive effect insufficient. Hence, the low-relative-permittivity substances are used in combination therewith to compensate the insufficiency of the rust-preventive effect and wear-preventive effect. For this purpose, the high-relative-permittivity substances and the low-relative-permittivity substances are mixed together in the same amount, thereby making it possible to attain a satisfactory balance between quick recovery of viscosity and the rust-preventive and wear-preventive effects.

Incidentally, the amount of these rust preventives and antiwear agents to be added is not particularly limited so long as these additives do not defeat the object of the invention.

Furthermore, inorganic particles having a BET specific surface area of 300 m$^2$/g or more, preferably 500 m$^2$/g or more, may be added as an additive. Such inorganic particles have the effect of inhibiting the gelling agent from agglomerating at high temperatures to soften the lubricant composition and from thus becoming less apt to re-form a network. Suitable as such inorganic particles are Ketjen Black, alumina, silica, zeolite, and the like. Preferred of these are Ketjen Black and zeolite. Two or more kinds of inorganic particles may be used in combination.

The content of the inorganic particles is preferably 0.5-5% by mass, more preferably 1-3% by mass, based on the whole lubricant composition. In case where the content of the inorganic particles is less than 0.5% by mass, the effect of inhibiting the gelling agent from agglomerating at high temperatures is not sufficiently obtained. In case where the content thereof exceeds 5% by mass, this lubricant composition not only has too high an initial consistency and hence poor handleability but also does not become flowable like oils even when shear force is applied thereto, resulting in poor lubricity.

Various additives which have conventionally been used for lubrication can be further added, either alone or as a mixture of two or more thereof, to the lubricant composition. Examples of the additives include antioxidants such as amine-based antioxidants, phenolic antioxidants, sulfur-compound antioxidants, zinc dithiophosphate, and zinc dithiocarbamate, rust preventives such as sulfonic acid metal salts, ester-based rust preventives, amine-based rust preventives, naphthenic acid metal salts, and succinic acid derivatives, extreme-pressure agents such as phosphorus-compound agents, zinc dithiophosphate, and organomolybdenum compounds, oiliness improvers such as fatty acids, animal oils, and vegetable oils, and metal deactivators such as benzotriazole. The amount of these additives to be added is not particularly limited so long as the additives do not defeat the object of the invention.

(Production Processes)

The lubricant composition may be produced in the following manner. A gelling agent and additives are added to a base oil in respective given amounts, and the resultant mixture is stirred with heating until the gelling agent dissolves. After the gelling agent has completely dissolved, this lubricant composition is poured into an aluminum vat which has been water-cooled beforehand, and the vat is cooled with cold water to thereby obtain a gel-state object. This gel-state object is treated with a three-roll mill.

In the case where a metal soap is used as a thickener in combination with a gelling agent, the procedure is as follows. The metal soap, the gelling agent, and additives are added to a base oil in respective given amounts, and the resultant mixture is stirred with heating until the metal soap and the gelling agent dissolve. This mixture is subsequently subjected to the same operations as described above. In the case where a urea compound is used as a thickener in combination with a gelling agent, the procedure is as follows. The urea compound is synthesized by reacting an amine with an isocyanate in a base oil. The gelling agent and additives are added thereto in respective given amounts, and the resultant mixture is sufficiently stirred and heated to a temperature at which the gelling agent dissolves. This mixture is subsequently subjected to the same operations as described above.

[Rolling Device]

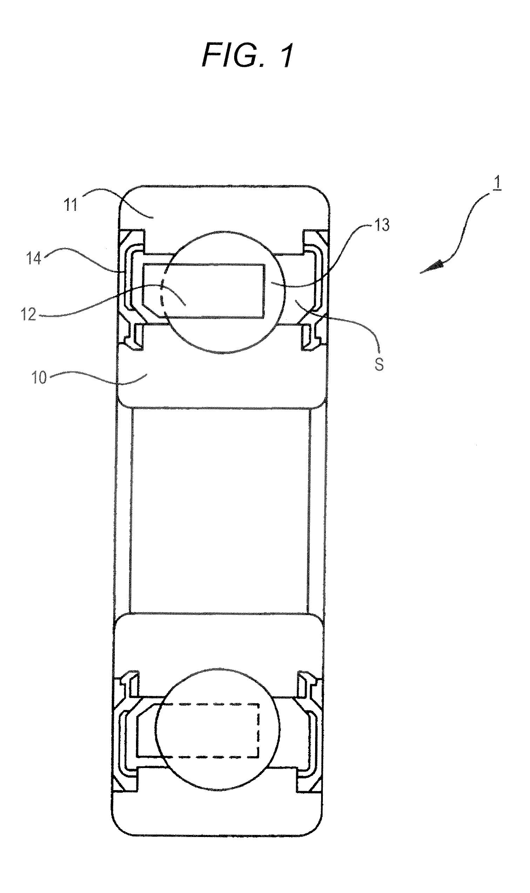

The rolling device of the invention is a rolling device packed with the lubricant composition described above. Examples thereof include the rolling bearing 1 shown in Fig. 1. As the figure shows, the rolling bearing 1 is configured by disposing a plurality of balls 13 between an inner ring 10 and an outer ring 11 so as to be freely rollably held by means of a cage 12, filling the lubricant composition (not shown) into the bearing space S formed by the inner ring 10, outer ring 11, and balls 13, and sealing the openings with seals 14 and 14. The rolling bearing 1 having such configuration works at a low torque, is free from lubricant leakage, and has a long life.

Examples of the rolling device include linear guides, ball screws, direct-acting bearings, etc., besides rolling bearings. By filling the lubricant composition into such devices, a life prolongation can be attained simultaneously with a low torque and freedom from lubricant leakage.

Examples

The invention will be explained below in more detail by reference to Examples and Comparative Examples, but the invention should not be construed as being limited by the following Examples.

(EXAMPLES 1 TO 17 AND COMPARATIVE EXAMPLES 1 TO 3)

Lubricant compositions were prepared using base oils (polyol ester oil, 33 mm$^2$/s at 40°C; ether oil, 32.4 mm$^2$/s at 40°C), thickeners, gelling agents (amino acid-based gelling agent; dibutyl N-2-ethylhexanoyl-L-glutamamide: benzylidene sorbitol-based gelling agent; dibenzylidene sorbitol), and additives as shown in Table 1 and Table 2. Each lubricant composition was subjected to the following measurements and tests.

(1) Unworked Consistency and Worked Consistency

Measurement was made in accordance with JIS K2220.

(2) Apparent Viscosity at Shear Rate of 1,000 s$^{-1}$ and Apparent Viscosity at Shear Rate of 1 s$^{-1}$

A rheometer was used. Each lubricant composition was sandwiched between parallel plates, and the viscosity thereof was measured under the conditions of a gap of 0.1 mm, temperature of 30°C, oscillation mode of stress sweeping, and frequency of 10 Hz.

(3) Bearing Torque Test

Under the following conditions, torque was measured during the period from the time when 295 seconds had passed since initiation of rotation to the time when 305 seconds had passed since the rotation initiation. An average of the measured torque values was obtained as a torque value, from which a torque relative to the torque value for Comparative Example 3 was determined.

- Bearing: rolling bearing "6305", manufactured by NSK Ltd. (inner diameter, 25 mm; outer diameter, 62 mm; width, 17 mm)
- Seal: non-contact rubber seal
- Rotation speed: 3,000 min$^{-1}$
- Axial load: 294 N
- Radial load: 29.4 N
- Test temperature: room temperature
- Measurement period: 10 min

(4) Bearing Leakage Test

With respect to Examples 4 to 8 and 17 and Comparative Examples 1 to 3, the shaft was continuously rotated for 20 hours under the following conditions. The degree of leakage was determined from the difference in weight between before and after the rotation, and a value relative to the degree of leakage for Comparative Example 2 was determined.

- Bearing: rolling bearing "6305", manufactured by NSK Ltd. (inner diameter, 25 mm; outer diameter, 62 mm; width, 17 mm)
- Seal: non-contact rubber seal
- Rotation speed: 5,000 min$^{-1}$
- Axial load: 98 N
- Radial load: 98 N
- Test temperature: 80°C

(5) Percentage Recovery of Viscosity

With respect to Examples 13 to 16, the percentage recovery of elasticity was determined. Namely, each lubricant composition was examined for unworked consistency before shear was applied thereto (unworked consistency before shearing). Furthermore, each lubricant composition was agitated with a rotation/revolution type agitator for 3 minutes at a rotation speed of 1,370 r/min and a revolution speed of 1,370 r/min to apply shear thereto, and was then examined for unworked consistency (unworked consistency after shearing). In addition, after the application of shear, the lubricant composition was allowed to stand at 40°C for 1 hour and then examined for unworked consistency (unworked consistency after standing). The percentage recovery of viscosity was determined using the following equation. This percentage recovery of viscosity is a value which indicates what percentage the viscosity had recovered to at the time when 1 hour had passed since the application of shear. Namely, the larger the value thereof, the more the lubricant composition is apt to recover the viscosity. A percentage recovery of viscosity of 100% indicates that the lubricant composition has recovered, in 1 hour, the consistency which the composition possessed before the application of shear.

[Math. 1]

$$\text{Percentage recovery of viscosity (\%)} = \frac{(\text{unworked consistency after shearing}) - (\text{unworked consistency after standing})}{(\text{unworked consistency after shearing}) - (\text{unworked consistency before shearing})} \times 100$$

(6) High-Temperature Standing Test and Fluidity-Recovery Reversibility Test.

With respect to Example 16, 10 g of the lubricant composition was put on a laboratory dish and allowed to stand in a 150°C thermostatic chamber for 50 hours. Thereafter, the dish was taken out of the thermostatic chamber, and this lubricant composition was allowed to cool to room temperature and examined for unworked consistency. This consistency is shown as "Unworked consistency after high-temperature standing" in Table 1. So long as the value thereof is in the range of 220-295, which are substantially the same consistency as that of greases in general use, this lubricant composition can be deemed to have satisfactory thermal stability.

Furthermore, the lubricant composition which had undergo the high-temperature standing was agitated using a rotation/revolution type agitator for 3 minutes at a rotation speed of 1,370 r/min and a revolution speed of 1,370 r/min to apply shear thereto, and was then examined for unworked consistency. This consistency is shown as "Unworked consistency after shearing *" in Table 1. So long as the value thereof is 360 or larger, this lubricant composition can be deemed to come to have satisfactory flowability upon shearing.

After the application of shear, the lubricant composition was allowed to stand at 40°C for 3 hours and then examined again for unworked consistency. This consistency is shown as "Unworked consistency after fluidity-recovery reversibility test" in Table 1. So long as the value thereof is in the range of 220-295, which are substantially the same consistency as that of greases in general use, this lubricant composition can be deemed to have satisfactory recovery properties. In addition, the larger the difference between the "unworked consistency after shearing" and the "unworked consistency after fluidity-recovery reversibility test", the better the fluidity-recovery reversibility.

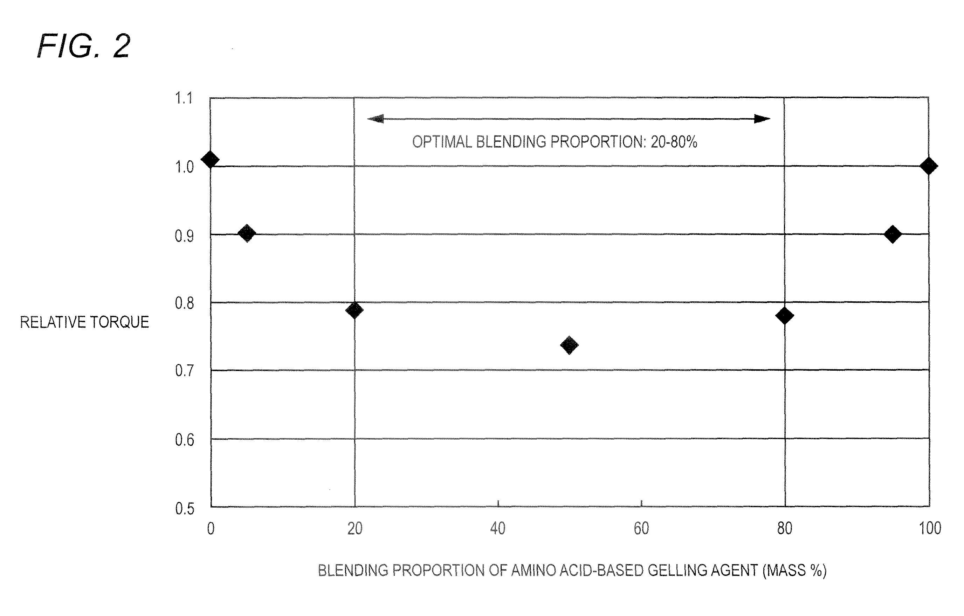

The results are shown in Table 1 and Figs. 2 to 4. The lubricant compositions in which the difference between the worked consistency and the unworked consistency is 40-130 satisfy the requirement that the apparent viscosity at shear rate 1,000 s$^{-1}$ is 5 Pa·s or less and the apparent viscosity at shear rate 1 s$^{-1}$ is 500 Pa·s or higher. These lubricant compositions gave desirable results with respect to each evaluation item.

Meanwhile, Fig. 2 shows the following. In lubricant compositions which employed the same thickener amount, the relative torque was minimum when the amount of the amino acid-based gelling agent and that of the benzylidene sorbitol-based gelling agent were the same (blending proportion of the amino acid-based gelling agent, 50% by mass), and the relative torque increased as the blending proportion of the other gelling agent became higher. So long as the blending proportion of the amino acid-based gelling agent (or the blending proportion of the benzylidene sorbitol-based gelling agent) is 20-80% by mass, a satisfactory reduction in torque can be attained.

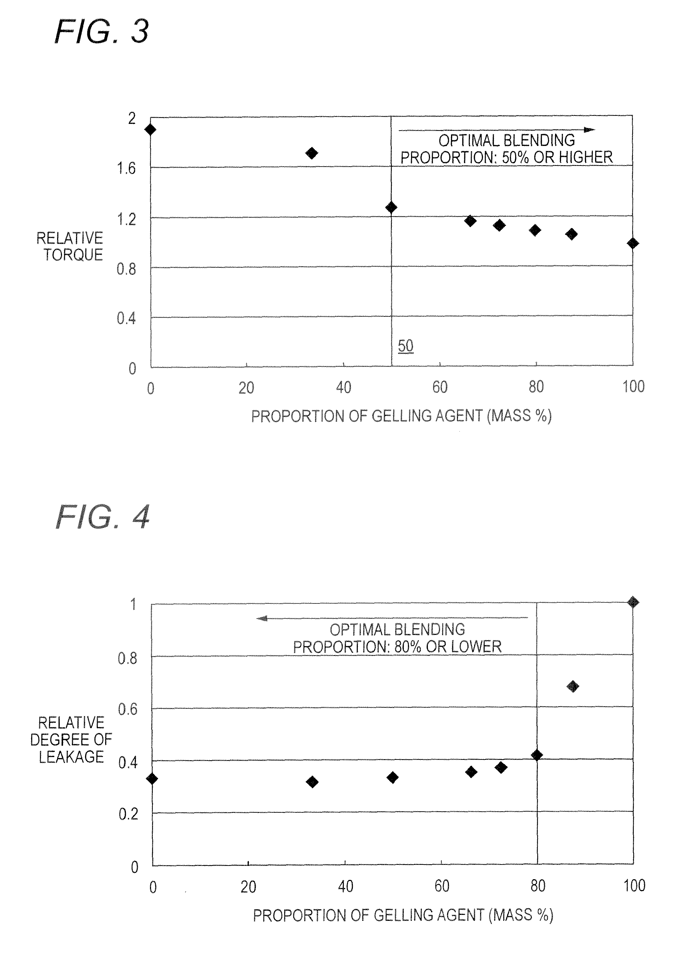

Moreover, as shown in Fig. 3, so long as the blending proportion of the gelling agent in the sum of the thickener and the gelling agent is 50% by mass or higher, a reduction in torque can be attained. As shown in Fig. 4, so long as the blending proportion of the gelling agent is 80% by mass or less, leakage can be inhibited. It can be seen from these results that the (gelling agent):(thickener) ratio is preferably (50-80):(50-20).

[Table 1]

Table 1

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Base oil | Ether | - | - | - | - | - | - | - | - | - | - |
| | Polyol ester | 94 | 94 | 94 | 94.5 | 94 | 95 | 94 | 92 | 94 | 94 |
| Thickener | Lithium 12-hydroxystearate | - | - | - | 1.5 | 3 | 1 | - | - | - | - |
| | Aliphatic urea | 2 | 2 | 2 | - | - | - | - | - | 2 | 2 |
| | Aromatic urea | - | - | - | - | - | - | 2 | 4 | - | - |
| Gelling agent | Amino acid-based gelling agent | 2 | 0.8 | 3.2 | 2 | 1.5 | 2 | 2 | 2 | 4 | 0.2 |
| | Benzylidene sorbitol-based gelling agent | 2 | 3.2 | 0.8 | 2 | 1.5 | 2 | 2 | 2 | 0 | 3.8 |
| Additives | Diphenyl hydrogen phosphate (relative permittivity, 1300) | - | - | - | - | - | - | - | - | - | - |
| | Sorbitan trioleate (relative permittivity, 3.5) | - | - | - | - | - | - | - | - | - | - |
| Unworked consistency | | 240 | 265 | 265 | 225 | 225 | 230 | 240 | 235 | 275 | 270 |
| Worked consistency | | 350 | 350 | 350 | 335 | 320 | 360 | 350 | 330 | 380 | 380 |
| (Worked consistency)- (unworked consistency) | | 110 | 85 | 85 | 110 | 95 | 130 | 110 | 95 | 105 | 110 |
| Apparent viscosity at shear rate 1 s$^{-1}$ (Pa·s) | | 1530 | 1470 | 1450 | 1530 | 830 | 1280 | 1150 | 1310 | 1420 | 1430 |
| Apparent viscosity at shear rate 1000 s$^{-1}$ (Pa·s) | | 3.5 | 3.5 | 3.5 | 3.0 | 3.0 | 25 | 3.0 | 3.5 | 3.5 | 3.5 |
| Proportion of gelling agent (%) | | 66.7 | 66.7 | 66.7 | 72.7 | 50.0 | 80.0 | 66.7 | 50.0 | 66.7 | 66.7 |
| Bearing torque test | | 0.8 | 0.7 | 0.7 | 0.6 | 0.7 | 0.6 | 0.6 | 0.7 | 0.8 | 0.8 |
| Bearing leakage test | | - | - | - | 0.37 | 0 33 | 043 | 037 | 0.33 | - | - |
| Unworked consistency after shearing | | - | - | - | - | - | - | - | - | - | - |
| Percentage recovery of viscosity (%) | | - | - | - | - | - | - | - | - | - | - |

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Unworked consistency after high-temperature standing | - | - | - | - | - | - | - | - | - | - |
| Unworked consistency after shearing* | - | - | - | - | - | - | - | - | - | - |
| Unworked consistency after fluidity-recovery reversibility test | - | - | - | - | - | - | - | - | - | - |
| Note) Each amount is in % by mass. | | | | | | | | | | |

[Table 2]

| | | Example 11 | Example 12 | Example 13 | Example 14 | Example 15 | Example 16 | Example 17 | Comparative Example 1 | Comparative Example 2 | Comparative Example 3 |
|---|---|---|---|---|---|---|---|---|---|---|---|
| Base oil | Ether | - | - | - | - | - | 28 | - | - | - | - |
| | Polyol ester | 94 | 94 | 94 | 94 | 94 | 66 | 94 | 96 | 97 | 90 |
| Thickener | Lithium 12-hydroxystearate | - | - | - | - | - | - | 4 | 0.5 | - | 10 |
| | Aliphatic urea | 2 | 2 | 2 | 2 | 2 | 2 | - | - | - | - |
| | Aromatic urea | - | - | - | - | - | - | - | - | - | - |
| Gelling agent | Ammo acid-based gelling agent | 3.8 | 0 | 2 | 2 | 2 | 2 | 1 | 1.75 | 1.5 | - |
| | Benzylidene sorbitol-based gelling agent | 0.2 | 4 | 2 | 2 | 2 | 2 | 1 | 1.75 | 1.5 | - |
| Additives | Diphenyl hydrogen phosphate (relative permittivity, 1300) | - | - | 1 | - | 1 | 1 | - | - | - | - |
| | Sorbitan trioleate (relative permittivity 3.5) | - | - | - | 1 | 1 | 1 | - | - | - | - |
| Unworked consistency | | 270 | 275 | 230 | 230 | 230 | 250 | 230 | 240 | 250 | 225 |
| Worked consistency | | 380 | 380 | 340 | 340 | 340 | 360 | 270 | 375 | 390 | 240 |
| (Worked consistency) - (unworked consistency) | | 110 | 105 | 110 | 110 | 110 | 110 | 40 | 135 | 140 | 15 |
| Apparent viscosity at shear rate 1 $s^{-1}$ (Pa·s) | | 1410 | 1450 | 1530 | 1530 | 1530 | 1370 | 710 | 850 | 230 | 420 |
| Apparent viscosity at shear rate 1000 $s^{-1}$ (Pa s) | | 3.5 | 3.5 | 3.5 | 3.5 | 3.5 | 3.0 | 3.0 | 2.0 | 1.5 | 5.0 |
| Proportion of gelling agent (%) | | 66.7 | 66.7 | 66.7 | 66.7 | 66.7 | 66.7 | 33.3 | 67.5 | 100.0 | 0.0 |
| Bearing torque test | | 0.8 | 0.8 | 0.6 | 0.6 | 0.6 | 0.6 | 0.9 | 0.5 | 0.5 | 1.0 |
| Bearing leakage test | | - | - | - | - | - | - | 0.33 | 0.67 | 1.0 | 0.33 |

(continued)

| | Example 11 | Example 12 | Example 13 | Example 14 | Example 15 | Example 16 | Example 17 | Comparative Example 1 | Comparative Example 2 | Comparative Example 3 |
|---|---|---|---|---|---|---|---|---|---|---|
| Unworked consistency after shearing | - | - | 380 | 375 | 370 | 370 | - | - | - | - |
| Percentage recovery of viscosity (%) | - | - | 100 | 75 | 100 | 100 | - | - | - | - |
| Unworked consistency after high-temperature standing | - | - | - | - | - | 255 | - | - | - | - |
| Unworked consistency after shearing* | - | - | - | - | - | 375 | - | - | - | - |
| Unworked consistency after fluidity-recovery reversibility test | - | - | - | - | - | 255 | - | - | - | - |

Note) Each amount is m % by mass

(EXAMPLES 18 TO 31)

Here, investigations were made on the effect to be produced in the case of adding a rust preventive or antiwear agent having a relative permittivity at 1,000 Hz of 1,000 or higher or in the case of adding a rust preventive or antiwear agent having a relative permittivity at 1,000 Hz of 1,000 or higher in combination with a rust preventive or antiwear agent having a relative permittivity at 1,000 Hz of less than 1,000.

A polyol ester oil (33 $mm_2$/s at 40°C), gelling agents (amino acid-based gelling agent; dibutyl N-2-ethylhexanoyl-L-glutamamide: benzylidene sorbitol-based gelling agent; dibenzylidene sorbitol), and additives were used to prepare lubricant compositions as shown in Table 2. These lubricant compositions were examined for unworked consistency, worked consistency, apparent viscosity at a shear rate of 1,000 $s^{-1}$, apparent viscosity at a shear rate of 1 $s^{-1}$, unworked consistency after shearing, and percentage recovery of viscosity in the same manners as described above.

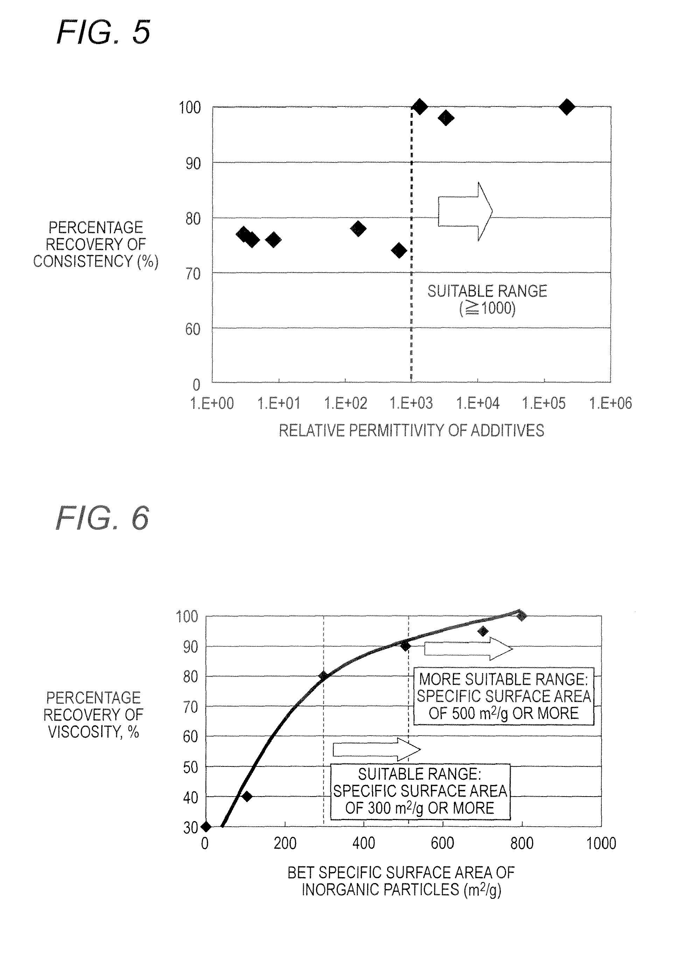

The results are shown in Table 2 and Fig. 5. It can be seen that the addition of a rust preventive or antiwear agent having a relative permittivity at 1,000 Hz of 1,000 or higher or the addition of a rust preventive or antiwear agent having a relative permittivity at 1,000 Hz of 1,000 or higher in combination with a rust preventive or antiwear agent having a relative permittivity at 1,000 Hz of less than 1,000 is preferred because the addition thereof brought about a percentage viscosity recovery of substantially 100% and quicker recovery of viscosity. In particular, it is more preferred to use the amino acid-based gelling agent and the benzylidene sorbitol-based gelling agent in combination.

[Table 3]

Table 2

| | | Examples 18 | Example 19 | Example 20 | Example 21 | Example 22 | Example 23 | Example 24 |
|---|---|---|---|---|---|---|---|---|
| Base oil | Polyol ester | 94.5 | 94.5 | 94.5 | 93.5 | 93.5 | 93.5 | 93 |
| Gelling agent | Amino acid-based gelling agent | 2.25 | 2.25 | 5 | 2.25 | 2.25 | 2.25 | 5 |
| | Benzylidene sorbitol-based gelling agent | 2.25 | 2.25 | - | 2.25 | 2.25 | 2.25 | - |
| Additives | Diphenyl hydrogen phosphate (relative permittivity, 1300) | 1 | - | - | 1 | 1 | - | - |
| | Mono-n-octyl phosphate (relative permittivity, 220000) | - | 1 | - | - | - | 1 | - |
| | Diethylphosphonoacetic acid (relative permittivity, 2700) | - | - | 1 | - | - | - | 1 |
| | Polyoxyethylene lauryl ether (relative permittivity, 800) | - | - | - | - | - | - | - |
| | Polyoxyethylene lauryl ether (relative permittivity, 640) | - | - | - | - | - | - | - |
| | Oleoylsarcosine (relative permittivity, 150) | - | - | - | - | 1 | - | - |
| | Sorbitan monooleate (relative permittivity, 8.9) | - | - | - | 1 | - | 1 | 1 |
| | Sorbitan trioleate (relative permittivity, 3.5) | - | - | - | - | - | - | - |
| | Trioleyl phosphite (relative permittivity, 2.9) | - | - | - | - | - | - | - |
| Unworked consistency | | 200 | 200 | 205 | 200 | 205 | 205 | 210 |
| Worked consistency | | 320 | 320 | 315 | 310 | 315 | 315 | 320 |
| (Worked consistency) - (unworked consistency) | | 120 | 120 | 110 | 110 | 110 | 110 | 110 |
| Apparent viscosity at shear rate 1 $s^{-1}$ (Pa·s) | | 1950 | 2120 | 1770 | 2130 | 1920 | 1970 | 1810 |
| Apparent viscosity at shear rate 1000 $s^{-1}$ (Pa·s) | | 4.0 | 4.0 | 3.5 | 3.5 | 3.0 | 3.0 | 3.5 |
| Unworked consistency after shearing | | 365 | 365 | 370 | 370 | 375 | 370 | 375 |
| Percentage recovery of viscosity (%) | | 100 | 100 | 98 | 100 | 100 | 99 | 98 |
| Note) Each amount is in % by mass. | | | | | | | | |

[Table 4]

Table 2 (continued)

| | | Example 25 | Example 26 | Example 27 | Example 28 | Example 29 | Example 30 | Example 31 |
|---|---|---|---|---|---|---|---|---|
| Base oil | Polyol ester | 94.5 | 94.5 | 94.5 | 94.5 | 94.5 | 94.5 | 94.5 |
| Gelling agent | Amino acid-based gelling agent | 2.25 | 2.25 | 2.25 | 2.25 | 2.25 | 2.25 | 2.25 |
| | Benzylidene sorbitol-based gelling agent | 2.25 | 2.25 | 2.25 | 2.25 | 2.25 | 2.25 | 2.25 |
| Additives | Diphenyl hydrogen phosphate (relative permittivity, 1300) | - | - | - | - | - | - | - |
| | Mono-n-octyl phosphate (relative permittivity, 220000) | - | - | - | - | - | - | - |
| | Diethylphosphonoacetic acid (relative permittivity, 2700) | - | - | - | - | - | - | - |
| | Polyoxyethylene lauryl ether (relative permittivity, 800) | - | - | - | - | - | - | 1 |
| | Polyoxyethylene lauryl ether (relative permittivity, 640) | 1 | - | - | - | - | - | - |
| | Oleoylsarcosine (relative permittivity, 150) | - | - | - | - | - | 1 | - |
| | Sorbitan monooleate (relative permittivity, 8.9) | - | - | 1 | - | - | - | - |
| | Sorbitan trioleate (relative permittivity, 3.5) | - | - | - | 1 | - | - | 1 |
| | Trioleyl phosphite (relative permittivity, 2.9) | - | - | - | - | 1 | - | - |
| Unworked consistency | | 205 | 210 | 215 | 215 | 210 | 210 | 220 |
| Worked consistency | | 315 | 320 | 325 | 325 | 310 | 310 | 320 |
| (Worked consistency) - (unworked consistency) | | 110 | 110 | 110 | 110 | 100 | 100 | 100 |
| Apparent viscosity at shear rate 1 s$^{-1}$ (Pa·s) | | 1970 | 2600 | 2130 | 2160 | 1970 | 2110 | 2220 |
| Apparent viscosity at shear rate 1000 s$^{-1}$ (Pa·s) | | 4.0 | 3.0 | 3.0 | 3.5 | 3.0 | 3.0 | 3.0 |
| Unworked consistency after shearing | | 370 | 380 | 380 | 380 | 380 | 380 | 380 |
| Percentage recovery of viscosity (%) | | 74 | 78 | 76 | 76 | 77 | 78 | 75 |
| Note) Each amount is in % by mass. | | | | | | | | |

(EXAMPLES 32 TO 37 AND COMPARATIVE EXAMPLES 4 TO 6)

Here, the effect of base oils including an ether oil was investigated.

Lubricant compositions were prepared using base oils (polyol ester oil, 33 mm$^2$/s at 40°C; ether oil, 32.4 mm$^2$/s at 40°C), a thickener, and gelling agents (amino acid-based gelling agent; dibutyl N-2-ethylhexanoyl-L-glutamamide: benzylidene sorbitol-based gelling agent; dibenzylidene sorbitol) as shown in Table 3. These lubricant compositions were examined for unworked consistency, worked consistency, apparent viscosity at a shear rate of 1,000 s$^{-1}$, apparent viscosity at a shear rate of 1 s$^{-1}$, unworked consistency after high-temperature standing, unworked consistency after shearing, and unworked consistency after fluidity-recovery reversibility test in the same manners as described above.

The results are shown in Table 3. It can be seen that the inclusion of an ether oil in the base oils is preferred because improvements in thermal stability and recovery property were brought about thereby.

[Table 5]

Table 3

| | | Examples 32 | Example 33 | Examples 34 | Example 35 | Example 36 | Example 37 | Comparative Example 4 | Comparative Example 5 | Comparative Example6 |
|---|---|---|---|---|---|---|---|---|---|---|
| Base oil | Ether | 28.5 | 47.5 | 14.3 | 38 | 28 | 0 | 66.5 | 95 | 28.5 |
| | Polyol ester | 66.5 | 47.5 | 80.7 | 57 | 66 | 95 | 28.5 | 0 | 66.5 |
| Thickener | Aliphatic urea | - | - | - | - | 2 | - | - | - | - |
| Gelling agent | Benzylidene sorbitol-based gelling agent | 1.5 | 1.5 | 1.5 | 1 | 2 | 1.5 | 1.5 | 1.5 | 4 |
| | Amino acid-based gelling agent | 3.5 | 3.5 | 3.5 | 4 | 2 | 3.5 | 3.5 | 3.5 | 1 |
| Unworked consistency | | 255 | 280 | 240 | 265 | 250 | 225 | 305 | 320 | 320 |
| Worked consistency | | 345 | 375 | 325 | 360 | 360 | 325 | >400 | >400 | >400 |
| (Worked consistency) - (unworked consistency) | | 90 | 95 | 85 | 95 | 110 | 100 | - | - | - |
| Apparent viscosity at shear rate 1 s$^{-1}$ (Pa s) | | 1150 | 1030 | 1220 | 1120 | 1320 | 1570 | 820 | 750 | 710 |
| Apparent viscosity at shear rate 1000 s$^{-1}$ (Pa s) | | 2.5 | 2.0 | 2.5 | 2.0 | 3.5 | 3.0 | 2.0 | 2.0 | 2.0 |
| Unworked consistency after high-temperature standing | | 250 | 220 | 275 | 255 | 250 | 290 | 180 | 140 | 180 |
| Unworked consistency after shearing | | 375 | 360 | 385 | 380 | 360 | >400 | 310 | 260 | 280 |
| Unworked consistency after fluidity-recovery reversibility test | | 250 | 240 | 285 | 270 | 250 | 315 | 250 | 190 | 210 |
| Note) Each amount is in % by mass | | | | | | | | | | |

(EXAMPLES 38 TO 43 AND COMPARATIVE EXAMPLE 7)

Here, the effect to be produced in the case of adding inorganic particles was investigated.

Lubricant compositions were prepared using a base oil (polyol ester oil; 33 mm$^2$/s at 40°C), a thickener, gelling agents (amino acid-based gelling agent; dibutyl N-2-ethylhexanoyl-L-glutamamide: benzylidene sorbitol-based gelling agent; dibenzylidene sorbitol), and inorganic particles (the kinds and the BET specific surface areas are as shown in the table) as shown in Table 4. These lubricant compositions were examined for unworked consistency, worked consistency, apparent viscosity at a shear rate of 1,000 s$^{-1}$, apparent viscosity at a shear rate of 1 s$^{-1}$, unworked consistency after high-temperature standing, unworked consistency after shearing, and percentage recovery of viscosity in the same manners as described above.

Furthermore, using rolling bearing "6305", manufactured by NSK Ltd. (inner diameter, 25 mm; outer diameter, 62 mm; width, 17 mm; non-contact rubber seal), a bearing torque test was conducted in which the shaft was rotated at room temperature under an axial load of 98 N and a radial load of 29.4 N at 3,000 min$^{-1}$, and an average torque during the period from the time when 1,200 seconds had passed since initiation of the rotation to the time when 1,800 seconds had passed since the rotation initiation was determined. The results are given in terms of relative value, with the average torque for Comparative Example 7 being 1.

Moreover, a bearing seizure test was conducted in the following manner. Each sample was filled into deep groove ball bearing "6305", manufactured by NSK Ltd. (inner diameter, 25 mm; outer diameter, 62 mm; width, 17 mm; non-contact rubber seal) to produce a test bearing. This test bearing was rotated at an ambient temperature of 140°C under an axial load of 98 N and a radial load of 98 N at 5,000 min$^{-1}$, and the time period required for the bearing to seize (seizure life) was determined. The results are given in terms of relative value, with the seizure life for Comparative Example 7 being 1.

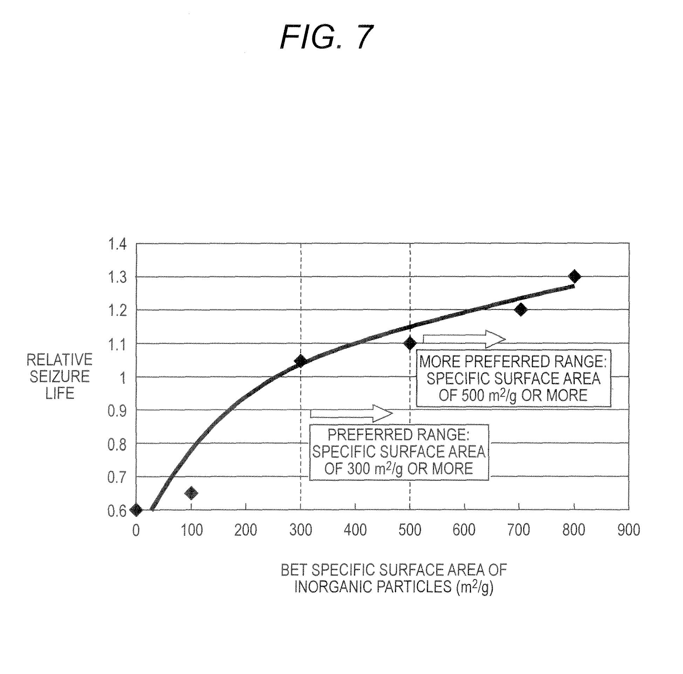

The results are shown in Table 4 and Figs. 6 and 7. It can be seen that the inclusion of inorganic particles having a BET specific surface area of 300 m$^2$/g or more is preferred because improvements in recovery property and seizure resistance were brought about thereby.

[Table 6]

Table 4

| | | Example 38 | Example 39 | Example 40 | Example 41 | Example 42 | Example 43 | Comparative Example 7 |
|---|---|---|---|---|---|---|---|---|
| Base oil | Polyol ester | 94 | 94 | 94 | 94 | 94 | 95.5 | 90 |
| Thickener | Lithium 12-hydroxystearate | - | - | - | - | - | - | 10 |
| Gelling agent | Amino acid-based gelling agent | 2 | 2 | 2 | 2 | 2 | 2.25 | - |
| Gelling agent | Benzylidene sorbitol-based gelling agent | 2 | 2 | 2 | 2 | 2 | 2.25 | - |
| Inorganic particles | Ketjen Black | 2 | - | - | - | - | - | - |
| Inorganic particles | Zeolite | - | 2 | - | - | - | - | - |
| Inorganic particles | Silica | - | - | 2 | - | - | - | - |
| Inorganic particles | Alumina | - | - | - | 2 | - | - | - |
| Inorganic particles | Acetylene black (carbon black) | - | - | - | - | 2 | - | - |
| BET specific surface area of the inorganic particles (m²/g) | | 800 | 700 | 500 | 300 | 100 | - | - |
| Unworked consistency | | 200 | 210 | 210 | 215 | 230 | 200 | 225 |
| Worked consistency | | 320 | 335 | 340 | 345 | 360 | 320 | 240 |
| (Worked consistency) - (unworked consistency) | | 120 | 125 | 130 | 130 | 130 | 120 | 15 |
| Apparent viscosity at shear rate 1 s⁻¹ (Pa·s) | | 1220 | 1210 | 1150 | 930 | 780 | 1950 | 420 |
| Apparent viscosity at shear rate 1000 s⁻¹ (Pa·s) | | 4.0 | 4.0 | 3.5 | 3.5 | 3.0 | 3.3 | 5.0 |
| After durability evaluation test | Unworked consistency after high-temperature standing | 195 | 205 | 220 | 240 | 280 | 300 | - |
| After durability evaluation test | Unworked consistency after shearing | 365 | 390 | 395 | 395 | 400 | 400 | - |
| After durability evaluation test | Percentage recovery of viscosity (%) | 100 | 95 | 90 | 80 | 40 | 30 | - |
| Bearing torque test | | 0.8 | 0.8 | 0.9 | 0.8 | 0.8 | 0.6 | 1.0 |
| Bearing seizure test | | 1.3 | 1.2 | 1.1 | 1.1 | 0.7 | 0.6 | 1.0 |

Note) Each amount is in % by mass.

While the invention has been described in detail and with reference to specific embodiments thereof, it will be apparent to one skilled in the art that various changes and modifications can be made therein without departing from the spirit and scope thereof.

This application is based on a Japanese patent application filed on July 26, 2011 (Application No. 2011-163433), a Japanese patent application filed on July 27, 2011 (Application No. 2011-164752), and a Japanese patent application filed on July 18, 2012 (Application No. 2012-159871), the contents thereof being incorporated herein by reference.

Industrial Applicability

The present invention is suitable as rolling devices for use in various industrial machines, vehicles, electrical machines and apparatus, various motors, automotive parts, etc.

Explanations of Reference Signs

1     Ball bearing
10    Inner ring
11    Outer ring
12    Cage
13    Ball
14    Seal

**Claims**

1. A rolling device, **characterized by** being equipped with an inner ring, an outer ring, and a plurality of rolling elements disposed between the inner ring and the outer ring so as to freely roll, and by being packed with a lubricant composition containing a gelling agent in which a difference between a worked consistency and an unworked consistency is 40-130.

2. The rolling device according to claim 1, **characterized in that** the lubricant composition has an apparent viscosity as measured at shear rate 1,000 s$^{-1}$ of 5 Pa·s or less and an apparent viscosity as measured at shear rate 1 s$^{-1}$ of 500 Pa·s or higher.

3. The rolling device according to claim 2, **characterized in that** the lubricant composition contains a thickener, and the gelling agent is at least one of an amino acid-based gelling agent and a benzylidene sorbitol-based gelling agent, in which the gelling agent has been mixed with the thickener in a ratio that (gelling agent):(thickener)=(50-80):(50-20) in terms of mass ratio, and
that a sum of the gelling agent and the thickener is 1-10% by mass of the whole lubricant composition.

4. The rolling device according to claim 3, **characterized in that** the lubricant composition contains at least one agent selected from rust preventives and antiwear agents which each have a relative permittivity of 1,000 or higher at 1,000 Hz.

5. The rolling device according to claim 4, **characterized in that** the lubricant composition contains a mixture of at least one agent selected from rust preventives and antiwear agents which each have a relative permittivity of 1,000 or higher at 1,000 Hz and at least one agent selected from rust preventives and antiwear agents which each have a relative permittivity, less than 1,000 at 1,000 Hz.

6. The rolling device according to claim 5, **characterized in that** a base oil of the lubricant composition includes an ether oil in a proportion of 10-50% by mass based on the whole base oil and that the gelling agent is a mixture in which (amino acid-based gelling agent):(benzylidene sorbitol-based gelling agent)=(50-85):(50-15) in terms of mass ratio.

7. The rolling device according to any one of claims 2 to 6, **characterized in that** the lubricant composition contains inorganic particles which have a BET specific surface area of 300 m$^2$/g or more.

# FIG. 1

EP 2 738 241 A1

## FIG. 2

RELATIVE TORQUE

OPTIMAL BLENDING PROPORTION: 20-80%

BLENDING PROPORTION OF AMINO ACID-BASED GELLING AGENT (MASS %)

## FIG. 3

## FIG. 4

## FIG. 5

PERCENTAGE RECOVERY OF CONSISTENCY (%)

RELATIVE PERMITTIVITY OF ADDITIVES

SUITABLE RANGE
($\geqq$1000)

## FIG. 6

PERCENTAGE RECOVERY OF VISCOSITY, %

BET SPECIFIC SURFACE AREA OF INORGANIC PARTICLES (m²/g)

MORE SUITABLE RANGE: SPECIFIC SURFACE AREA OF 500 m²/g OR MORE

SUITABLE RANGE: SPECIFIC SURFACE AREA OF 300 m²/g OR MORE

# FIG. 7

**INTERNATIONAL SEARCH REPORT**

| International application No. |
| --- |
| PCT/JP2012/069040 |

A.   CLASSIFICATION OF SUBJECT MATTER
*C10M115/08*(2006.01)i, *C10M115/04*(2006.01)i, *C10M169/02*(2006.01)i,
*F16C33/66*(2006.01)i, *C10M105/18*(2006.01)n, *C10N20/00*(2006.01)n, *C10N30/00*
(2006.01)n, *C10N30/06*(2006.01)n, *C10N30/12*(2006.01)n, *C10N40/02*(2006.01)n,
According to International Patent Classification (IPC) or to both national classification and IPC

B.   FIELDS SEARCHED

Minimum documentation searched (classification system followed by classification symbols)
C10M101-177/00, C10N50/10

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>A | WO 2009/153938 A1 (JX Nippon Oil & Energy Corp.),<br>23 December 2009 (23.12.2009),<br>claims; paragraphs [0014], [0038]; examples<br>(Family: none) | 1,2<br>3-7 |
| X<br>Y | JP 2010-209129 A (NSK Ltd.),<br>24 September 2010 (24.09.2010),<br>claims; paragraph [0016]; examples<br>(Family: none) | 1-3<br>4-7 |
| X<br>Y | JP 2009-173795 A (NSK Ltd.),<br>06 August 2009 (06.08.2009),<br>claims; examples<br>(Family: none) | 1-3<br>4-7 |

| ☒   Further documents are listed in the continuation of Box C. | ☐   See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 October, 2012 (19.10.12) | Date of mailing of the international search report<br>30 October, 2012 (30.10.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/069040

C (Continuation). DOCUMENTS CONSIDERED TO BE RELEVANT

| Category* | Citation of document, with indication, where appropriate, of the relevant passages | Relevant to claim No. |
|---|---|---|
| X | JP 2009-173767 A (NSK Ltd.),<br>06 August 2009 (06.08.2009),<br>claims; examples<br>(Family: none) | 1-3 |
| Y | | 4-7 |
| X | JP 2010-138246 A (NSK Ltd.),<br>24 June 2010 (24.06.2010),<br>claims; examples<br>(Family: none) | 1-3 |
| Y | | 4-7 |
| Y | JP 8-295895 A (Nippon Oil Co., Ltd.),<br>12 November 1996 (12.11.1996),<br>claims; examples<br>(Family: none) | 4-7 |
| Y | JP 2002-194373 A (NSK Ltd.),<br>10 July 2002 (10.07.2002),<br>claims; examples<br>(Family: none) | 4-7 |
| Y | JP 2008-274987 A (NSK Ltd.),<br>13 November 2008 (13.11.2008),<br>paragraph [0023]; examples<br>(Family: none) | 4-7 |

Form PCT/ISA/210 (continuation of second sheet) (July 2009)

**INTERNATIONAL SEARCH REPORT**

International application No.

PCT/JP2012/069040

Continuation of A. CLASSIFICATION OF SUBJECT MATTER
  (International Patent Classification (IPC))

*C10N50/10* (2006.01) n

(According to International Patent Classification (IPC) or to both national
classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58219297 A
- WO 2006051671 A
- JP 2011026432 A
- JP 2005139398 A
- JP 2010209129 A
- JP 2010196727 A
- JP 2011163433 A
- JP 2011164752 A
- JP 2012159871 A